# EUROPÄISCHE PATENTANMELDUNG

(11) **EP 0 837 465 A1**
(43) Veröffentlichungstag der Anmeldung: **22.04.1998**
(21) Anmeldenummer: 97114154.4
(22) Anmeldetag: 16.08.1997
(51) Int. Cl.: G11B 15/03, G11B 15/20, G11B 31/00, G11B 27/10

(54) **Abspielgerät**

(30) Priorität: 21.10.1996 DE 19643294
(71) Anmelder: ROBERT BOSCH GMBH, 70442 Stuttgart (DE)
(72) Erfinder: Rychlak, Stefan, 31241 Ilsede (DE)

(57) **Zusammenfassung**

Es wird ein Abspielgerät (1), insbesondere ein Autoradio mit integriertem Kassettenteil für Aufzeichnungsträger (5) vorgeschlagen, das einen Suchlauf ermöglicht. Dazu weist das Abspielgerät (1) eine Suchlaufvorrichtung (10) und eine Wiedergabeeinheit (15) zum Anspielen von Aufzeichnungen auf einem in das Abspielgerät (1) eingelegten Aufzeichnungsträger (5) auf. Die Suchlaufvorrichtung (10) tastet eine Aufzeichnungsspur des Aufzeichnungsträgers (5) ab. Die Suchlaufvorrichtung (10) gibt zu vorgegebenen Zeiten abgetastete Aufzeichnungen an die Wiedergabeeinheit (15) zur Wiedergabe ab. Weiterhin gibt die Suchlaufvorrichtung (10) die abgetasteten Aufzeichnungen für eine vorgegebene Zeitdauer an die Wiedergabeeinheit (15) zur Wiedergabe ab.

## Beschreibung

### Stand der Technik

Die Erfindung geht Von einem Abspielgerät nach der Gattung des Hauptanspruchs aus.

Aus dem Blaupunktkatalog 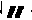 Mobile Audio Systeme '95/'96" ist bereits das Autoradio 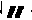 Hamburg RCM 104" bekannt, bei dem ein Kassettenspieler integriert ist. Der Kassettenspieler weist einen Kassettensuchlauf auf, der automatisch vorwärts oder rückwärts den nächsten bzw. einen der folgenden Titelanfänge auf der Kassette sucht.

### Vorteile der Erfindung

Das erfindungsgemäße Abspielgerät mit den Merkmalen des Hauptanspruchs hat demgegenüber den Vorteil, daß beim Suchlauf abgetastete Aufzeichnungen an die Wiedergabeeinheit auch dann zur Wiedergabe abgegeben werden, wenn keine zeitlichen Pausen zwischen zwei Aufzeichnungen auf dem Aufzeichnungsträger vorhanden sind, beispielsweise wenn auf einem Kassettenband Musikstücke ohne Pause nacheinander aufgezeichnet sind, so daß kein Titelanfang für die Suchlaufvorrichtung erkennbar ist. Somit ist bei solchermaßen auf einer Aufzeichnungsspur des Aufzeichnungsträgers gespeicherten Aufzeichnungen kein manuell durchgeführter Suchvorgang nach einer bestimmten Stelle auf der Aufzeichnungsspur des Aufzeichnungsträgers erforderlich. Vielmehr läßt sich die gesuchte Stelle automatisch, d.h. ohne zusätzliche Tastenbetätigungen, lokalisieren.

Durch die in den Unteransprüchen aufgeführten Maßnahmen sind vorteilhafte Weiterbildungen und Verbesserungen des im Hauptanspruch angegebenen Abspielgerätes möglich.

Vorteilhaft ist eine Eingabeeinheit, an der die vorgegebenen Zeiten einstellbar sind. Auf diese Weise kann der Benutzer auf einfache Weise den Zeitabstand zwischen den einzelnen Wiedergabezeitpunkten selbst nach seinen Bedürfnissen einstellen. Aufgrund des automatischen Suchvorgangs wird die Bedienung vereinfacht und vor allem bei Verwendung eines Autoradios mit Kassettenteil als Abspielgerät die Unfallgefahr aufgrund der Ablenkung durch Tastenbetätigung erheblich reduziert.

Vorteilhaft ist auch, daß die Suchlaufvorrichtung die abgetasteten Aufzeichnungen für eine vorgegebene Zeitdauer an die Wiedergabeinheit zur Wiedergabe abgibt. Auf diese Weise kann der Benutzer die aktuell durch die Suchlaufvorrichtung abgetastete Stelle der Aufzeichnungsspur besser erkennen.

Vorteilhaft ist auch, daß die vorgegebene Zeitdauer an der Eingabeeinheit einstellbar ist. Dadurch ist eine einfache Möglichkeit für den Benutzer gegeben, die Wiedergabezeitdauer seinen Bedürfnissen, beispielsweise für eine sichere Erkennbarkeit der wiedergebenen Aufzeichnungen, anzupassen.

### Zeichnung

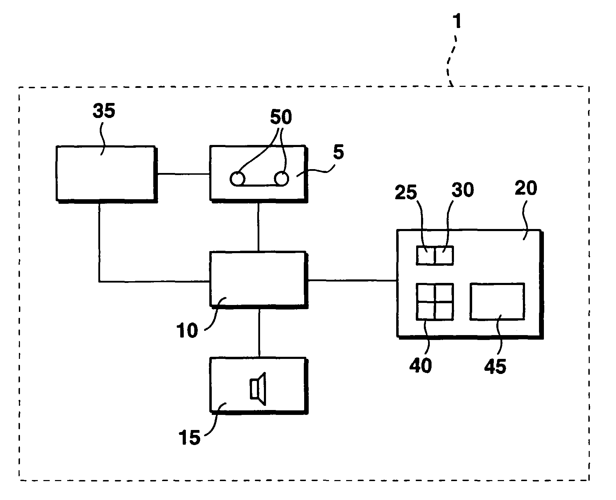

Ein Ausführungsbeispiel der Erfindung ist in der Zeichnung dargestellt und in der nachfolgenden Beschreibung näher erläutert. Es zeigt die einzige Figur ein Blockschaltbild eines Abspielgerätes.

### Beschreibung des Ausführungsbeispiels

In der Figur kennzeichnet 1 ein als Autoradio ausgebildetes Abspielgerät mit integriertem Kassettenteil. Das Abspielgerät 1 umfaßt eine Suchlaufvorrichtung 10, an die ein Aufzeichnungsträger 5, eine Antriebseinheit 35, eine Wiedergabeeinheit 15 und eine Eingabeeinheit 20 angeschlossen sind. Die Eingabeeinheit 20 umfaßt eine Tastatur 40, ein erstes Bedienelement 25, ein zweites Bedienelement 30 und eine Anzeige 45. Der Aufzeichnungsträger 5 ist außerdem mit der Antriebseinheit 35 verbunden. Als Aufzeichnungsträger 5 findet eine Kassette Verwendung, deren Band eine Aufzeichnungsspur mit gespeicherten Aufzeichnungen umfaßt. Die Suchlaufvorrichtung 10 weist einen Tonkopf auf, der die Aufzeichnungsspur des Kassettenbandes abtastet. Dabei wird das Kassettenband je nach Vorwärts- oder Rückwärtslauf auf eine seiner beiden Spulen 50 durch die Antriebseinheit 35 aufgespult, so daß die gesamte Aufzeichnungsspur der Kassette 5 vom Tonkopf der Suchlaufvorrichtung 10 abgetastet werden kann. An der Tastatur 40 gibt der Benutzer die Zeiten vor, bei denen die Suchlaufvorrichtung 10 abgetastete Aufzeichnungen der Aufzeichnungsspur der Kassette 5 an die Wiedergabeeinheit 15 zur akustischen Wiedergabe abgeben soll. Dabei wird ein Zeitintervall vorgegeben, das zwischen den einzelnen Wiedergabezeitpunkten für die Wiedergabe der abgetasteten Aufzeichnungen liegen soll. Mit der Suchlaufvorrichtung 10 werden die abgetasteten Aufzeichnungen jeweils nur für eine vorgegebene Zeitdauer an die Wiedergabeeinheit 15 zur Wiedergabe abgegeben, so daß zu den vorgegebenen Wiedergabezeitpunkten lediglich ein Anspielen der gerade abgetasteten Aufzeichnungen des in das Abspielgerät 1 eingelegten Aufzeichnungsträgers 5 erfolgt. Die Zeitdauer für das Anspielen der Aufzeichnungen kann vom Benutzer ebenfalls an der Tastatur 40 eingestellt und somit vorgegeben werden. Der Kassettensuchlauf kann von jeder beliebigen Bandposition der Kassette 5 aus gestartet werden und zwar sowohl in Vorwärts- als auch in Rückwärtsrichtung. Dabei dient das erste Bedienelement 25 zum Start des Suchlaufvorgangs in Vorwärtsrichtung und das zweite Bedienelement 30 zum Start des Suchlaufvorgangs in Rückwärtsrichtung. Durch Betätigung eines der beiden Bedienelemente 25, 30 kann ein aktivierter Suchlauf abgebrochen werden. Alle an der Eingabeeinheit 20 über die Tastatur 40, das erste Bedienelement 25 und das zweite Bedienelement 30 durchgeführten Eingaben werden an der Anzeige 45 zur Bedienkontrolle dargestellt. Beim Suchlaufvorgang wird das Kassettenband zwischen den Wiedergabezeitpunkten mit einer erhöhten Geschwindigkeit im schnellen Vor- bzw. Rücklauf gespult und nur während der Wiedergabe findet der Spulvorgang mit der entsprechend langsameren für Wiedergabe vorgesehenen Abspielgeschwindigkeit statt. Für die Wiedergabezeitdauer bei den Wiedergabezeitpunkten können auch Werte vorgegeben werden, zwischen denen der Benutzer über die Tastatur 40 auswählen kann. So ist es beispielsweise denkbar, eine Auswahl für die Wiedergabezeitdauer von 5 Sekunden, 10 Sekunden und 15 Sekunden zur Verfügung zu stellen. Nach dem Anspielen der Aufzeichnungen wird der Suchlauf für die vorgegebene Zeit wieder im schnellen Vor- bzw. Rücklauf fortgesetzt. Das Umschalten der Spulgeschwindigkeiten der Antriebseinheit 35 erfolgt dabei jeweils durch die Suchlaufvorrichtung 10. Findet der Suchlaufvorgang in Rückwärtsrichtung, also entgegengesetzt zur Abspielrichtung des Kassettenbandes statt, so muß zu den Wiedergabezeitpunkten die Suchlaufvorrichtung 10 die Antriebseinheit 35 auch dazu veranlassen, die Abspielrichtung für die zur Wiedergabe vorgegebene Zeitdauer auf die Vorwärtsrichtung umzustellen, damit die entsprechende Aufzeichnungsstelle für den Benutzer erkennbar ist und im gewohnten Hörgenuß wiedergegeben werden kann.

Der Suchlaufvorgang wird, wenn nicht vorher durch das erste oder zweite Bedienelement 25, 30, bei Erreichen des Bandendes abgebrochen. Ferner ist es auch denkbar, den Suchlauf in einem Autoreverse-Betrieb durchzuführen, d.h. beim jeweiligen Bandende die Kassettenseite automatisch zu wechseln. Ein Abbruch des Suchlaufvorgangs findet dabei erst dann statt, wenn das erste oder das zweite Bedienelement 25, 30 betätigt wird. Die Wahl der Kassettenseite für den Suchlaufvorgang kann ebenfalls an der Eingabeeinheit 20 vorgegeben werden, wofür gegebenenfalls weitere Bedienelemente an der Eingabeeinheit 20 vorzusehen sind oder die Tastatur 40 genutzt wird.

In weiteren nicht dargestellten Ausführungsbeispielen kann als Abspielgerät auch ein CD-Spieler, ein Tonbandgerät oder dergleichen, verwendet werden. Der Aufzeichnungsträger 5 ist dann entsprechend eine Kompaktdisk, ein Tonband oder dergleichen. Die Integration in ein Autoradio kann auch in diesen Fällen vorgesehen werden, besonders bei der Verwendung eines CD-Spielers.

Das erfindungsgemäße Abspielgerät 1 ist auch nicht auf Tonaufzeichnungen beschränkt, vielmehr kann es auch bei Bildabspielgeräten, wie beispielsweise Videorekordern Anwendung finden, wobei die Wiedergabeeinheit 15 dann zur visuellen Wiedergabe dient.

Außerdem läßt sich das beschriebene Suchlaufverfahren auch mit dem, gemäß dem Stand der Technik bekannten, Suchlaufverfahren ohne wesentlichen Zusatzaufwand kombinieren, so daß auch ein Suchlauf mit Detektion von Lücken zwischen Aufzeichnungen, z.B. Musikstücklücken, realisierbar ist.

## Patentansprüche

1. Abspielgerät (1), insbesondere ein Autoradio mit integriertem Kassettenteil, für Aufzeichnungsträger (5) mit einer Suchlaufvorrichtung (10) und einer Wiedergabeeinheit (15) zum Anspielen von Aufzeichnungen auf einem in das Abspielgerät (1) eingelegten Aufzeichnungsträger (5), dadurch gekennzeichnet, daß die Suchlaufvorrichtung (10) eine Aufzeichnungsspur des Aufzeichnungsträgers (5) abtastet und daß die Suchlaufvorrichtung (10) zu vorgegebenen Zeiten abgetastete Aufzeichnungen an die Wiedergabeeinheit (15) zur Wiedergabe abgibt.

2. Abspielgerät (1) nach Anspruch 1, dadurch gekennzeichnet, daß eine Eingabeeinheit (20) vorgesehen ist, an der die vorgegebenen Zeiten einstellbar sind.

3. Abspielgerät nach Anspruch 1 oder 2, dadurch gekennzeichnet, daß die Suchlaufvorrichtung (10) die abgetasteten Aufzeichnungen für eine vorgegebene Zeitdauer an die Wiedergabeeinheit (15) zur Wiedergabe abgibt.

4. Abspielgerät (1) nach Anspruch 3, dadurch gekennzeichnet, daß die vorgegebene Zeitdauer an der Eingabeeinheit (20) einstellbar ist.

5. Abspielgerät (1) nach Anspruch 2, 3 oder 4, dadurch gekennzeichnet, daß die Eingabeeinheit (20) mindestens ein Bedienelement (25, 30) vorsieht, durch dessen Betätigung der Abtastvorgang der Suchlaufvorrichtung (10) einleitbar und/oder beendbar ist.
